# EUROPEAN PATENT SPECIFICATION

(11) **EP 3 160 809 B1**
(45) Date of publication and mention of the grant of the patent: **05.12.2018**
(21) Application number: 14739039.7
(22) Date of filing: 27.06.2014
(51) Int. Cl.: B60W 20/00, B60W 50/00, B60W 10/26

(54) **A METHOD FOR CONTROLLING A STATE OF CHARGE OF A PLUG-IN HYBRID VEHICLE**
VERFAHREN ZUR KONTROLLE DES LADEZUSTANDS EINES PLUG-IN-HYBRIDFAHRZEUGS
PROCÉDÉ DE COMMANDE DE L'ÉTAT DE CHARGE D'UN VÉHICULE HYBRIDE RECHARGEABLE

(43) Date of publication of application: 03.05.2017
(73) Proprietor: Volvo Truck Corporation, 405 08 Göteborg (SE)
(72) Inventor: CARLSSON, Annika, S-442 32 Kungälv (SE); SMIDEBRANT, Tobias, S-415 16 Göteborg (SE)
(74) Representative: Volvo Technology Corporation
(86) International application number: PCT/EP2014/001756
(87) International publication number: WO 2015/197094

(56) References cited:
- EP-A1- 2 264 401
- EP-A2- 1 297 982
- WO-A1-2013/055830
- WO-A2-2010/003021
- WO-A2-2011/139680
- US-A1- 2011 288 712
- US-A1- 2012 158 227

## Description

### TECHNICAL FIELD

The invention relates to a method for controlling a state of charge of an electrical storage system of a plug-in hybrid electric vehicle.

The invention can be applied in plug-in hybrid electric vehicles, such as trucks, buses, and other utility vehicles. The invention is particularly advantageous for regular service vehicles. Although the invention will be described mainly with respect to a bus, the invention is not restricted to this particular vehicle, but may also be used in other vehicles, such as automobiles and trucks.

### BACKGROUND

A plug-in hybrid electric vehicle has both an electric motor and an internal combustion engine for providing propulsive power to the driving wheels. A plug-in hybrid electric vehicle utilizes a rechargeable electrical storage device, such as rechargeable batteries, that can be restored to full charge by connecting an electrical connector, for example an electrical plug, to an external electric power source.

There is however a limited number of charging stations available and poorly planned state of charge management of the vehicle's electrical storage system may therefore result in a depleted electrical storage system at undesirable locations, such as a driving zone where only electric driving is allowed.

There is thus a need for a method removing the above mentioned disadvantage.

Further attention is drawn to WO2013055830, providing a method of charging an energy storage system for an electric vehicle. The method includes determining the estimated consumption for a specific route of the electric vehicle at different times and setting a target end point for the energy storage system based upon a minimum state of charge level for the energy storage system.

EP2264401 discloses a method of searching for a route for the hybrid vehicle, specifically adapted for a hybrid vehicle that allows for selection of a traveling mode with an engine stopped approaches an area regulated by road pricing.

US20120158227 discloses an electric vehicle adapted to maximize an electric-only driving range. The vehicle includes a power source, an energy storage device, an auxiliary power unit (APU), and a controller. The power source propels the vehicle. The energy storage device supplies electricity to the power source.

WO 2010003021 discloses a vehicle and charging station that are designed such that an electric or hybrid vehicle can operate in a fashion similar to a conventional vehicle by being opportunity charged throughout a known route.

WO 2013110711 discloses an apparatus configured to predict at least a portion of a route that a vehicle is travelling, the apparatus being operable to compare data recorded in respect of a history of a current route a vehicle is travelling with data in respect of one or more routes a vehicle may travel thereby to predict at least a portion of a current route of a vehicle, the apparatus being further configured to control operation of a hybrid electric vehicle (HEV) in dependence on data in respect of said at least a portion of a predicted route.

### SUMMARY

An object of the invention is to provide a method for controlling a state of charge of an electrical storage system of a plug-in hybrid electric vehicle by which the previously mentioned problem is at least partly avoided. The object is achieved by a method according to claim 1.

The invention concerns a method for controlling a state of charge of an electrical storage system of a plug-in hybrid electric vehicle, according to claim 1.

State of charge (SOC) is the equivalent of a fuel gauge for an electrical storage system in for example a plug-in hybrid electric vehicle. The units of state of charge are percentage points (0% = empty; 100% = full). The electrical storage system may be a battery pack, one or more supercapacitors, or any other device capable of storing and delivering electrical energy to an electric propulsion motor of the plug-in hybrid electric vehicle.

A charging station is a physical location providing a source of electrical energy. In a charging station, the electrical storage system of the plug-in hybrid electric vehicle can be recharged with electrical energy.

It is generally preferred to drive plug-in hybrid electric vehicles in electric mode as much as possible since it reduces noise and air pollution locally and since electricity is much cheaper than internal combustion engine fuel such as petrol or diesel. In order to fully exploit the advantages of electric driving, it is desirable to reach a charging station with substantially depleted electrical storage device.

For plug-in hybrid buses in regular service, the time table generally includes specific time periods for charging at charging stations along the route. However, if the bus is late on time table or if the charging station is occupied, there will not be enough time for charging before the bus has to leave the charging station again. Leaving the charging station with insufficiently charged batteries may pose a serious problem in case the bus route passes through a zone where only electric driving is allowed.

A purpose of the method is to ensure that there will be enough electric energy in the electrical storage system to be able to travel the route coming after the charging station. This is done by first evaluating how much electric energy is needed for travelling the route coming after the charging station, i.e. determining a required minimum state of charge at the end of the charging period, and by calculating how much the state of charge can be expected to increase during the available charging period. From these two values, a target state of charge at arrival at the charging station, i.e. the amount of state of charge which should be left in the energy storage system when reaching the charging station, is calculated. The advantage of this method is that it allows for controlling the electric energy usage of the vehicle before arrival at the next coming charging station such that the required minimum state of charge required for driving the next coming route can be reached at the end of the charging period. Even if the available charging period at the charging station is foreseen to be shorter than originally expected, it will be possible to reach the minimum state of charge required for travelling the coming route. Consequently, it will be possible to reduce or even eliminate delays relative to the time table by shortening the charging period. The inventive method also enables handling of situations where the charging station initially is occupied by shortening the charging period in order not to cause a delay.

Further advantages are achieved by implementing one or several of the features of the dependent claims. The target state of charge at arrival at the next coming charging station lies in the range of 0-100%.

The plug-in hybrid electric vehicle may be a bus configured to travel along a planned fixed driving route having at least one charging station. The inventive method is especially advantageous for regular service plug-in hybrid electric buses as it allows for compensating for delays relative to a predetermined time table.

According to an aspect of the invention, the plug-in hybrid electric vehicle comprises a combustion engine for providing propulsive power, an electrical storage system for providing electrical power to an electrical motor for providing propulsive power, and an electrical contact or non-contact charging interface arranged for conveying electrical charge from the charging station to the electrical storage system. The term "propulsive power" refers to power leading to movement of the vehicle. The electric motor is a large electric motor capable of providing enough output propulsive power as to drive the vehicle on its own. An electrical contact charging interface may for example comprise a plug adapted for engagement with a socket or a sliding contact adapted for abutting an electrical conductor. A non-contact charging interface may for example comprise inductive coils.

The planned driving route may require travelling with at least electrical assistance by the electrical motor a certain distance of the planned driving route. Electrical assistance means vehicle electrical propulsive assistance. A driving route requiring travelling with at least electrical assistance by the electrical motor a certain distance of the planned driving route cannot be driven using only the combustion engine as propulsive power source without breaking a law, rule, regulation or the like associated with said certain distance of the planned driving route.

The planned driving route may require travelling in an electric-only mode a certain distance of the planned driving route. As used herein, the term "electric-only mode" refers to using only the electric motor for providing propulsive power. In the electric-only mode, the combustion engine is not running.

Said certain distance of the planned driving route may comprise an electric-only zone, a reduced vehicle noise zone, or a vehicle exhaust low emission zone. As used herein, the term "electric-only zone" refers to a geographical area in which only electric driving is allowed, i.e. it is only allowed to travel in an electric-only mode and the combustion engine is not allowed to run. Such electric-only zones are expected to be established by authorities in locations where it is desirable to reduce air pollution and noise, e.g. in city centres. In case the planned driving route comprises an electric-only zone, it is of utmost importance to have enough state of charge in the electrical storage system for driving the vehicle through the electric-only zone, or else the route cannot be travelled without breaking the rules, regulation and/or laws. Hence, the inventive method is especially advantageous for routes comprising electric-only zones.

As used herein, the term "reduced vehicle noise zone" refers to a geographical area in which vehicle electrical propulsive assistance is required for reducing the emission of vehicle noise. Driving using the electrical motor emits less noise than driving using the combustion engine. With an increasing level of electrical propulsion assistance the noise emission level will decrease more or less proportionally. Such reduced vehicle noise zones are expected to be established by authorities in locations where it is desirable to reduce vehicle noise emissions, e.g. in city centres. In case the planned driving route comprises a reduced vehicle noise zone, it is of utmost importance to have enough state of charge in the electrical storage system for driving the vehicle through the reduced vehicle noise zone with the proper level of electrical propulsion assistance, or else the route cannot be travelled without breaking the rules, regulation and/or laws. Hence, the inventive method is also advantageous for routes comprising reduced vehicle noise zones.

As used herein, the term "vehicle exhaust low emission zone" refers to a geographical area in which the allowed vehicle emission level is so low that it may only be accomplished when electrical propulsive assistance is provided from the electrical motor. Such vehicle exhaust low emission zones are expected to be established by authorities in locations where it is desirable to reduce vehicle exhaust emission levels, e.g. in city centres. In case the planned driving route comprises a vehicle exhaust low emission zone, it is of utmost importance to have enough state of charge in the electrical storage system for driving the vehicle through the vehicle exhaust low emission zone with a proper level of electrical propulsion assistance, or else the route cannot be travelled without breaking the rules, regulation and/or laws. Hence, the inventive method is also advantageous for routes comprising vehicle exhaust low emission zones.

Controlling the state of charge during traveling towards the next coming charging station is realised by controlling a propulsion power contribution ratio between the combustion engine and electrical motor. Both the combustion engine and the electrical motor may provide propulsion power to the vehicle. The propulsion power contribution ratio describes how much the combustion engine and the electrical motor respectively contributes to the propulsion power at a specific point of time. The more the electrical motor contributes to the propulsion power, the higher the depletion rate of the electrical storage system. The more the combustion engine contributes to the propulsion power, the lower the depletion rate of the electrical storage system. If the combustion engine provides all of the propulsion power, the state of charge is substantially or completely conserved. Consequently, if the target state of charge is reached before arrival at the charging station, that state of charge can be conserved until reaching the charging station by letting the combustion engine provide all the propulsion power. In the electric only-mode, the electrical motor provides all the propulsion power.

The minimum state of charge at end of the charging period may be determined by acquiring a predetermined minimum state of charge associated with the planned driving route coming after the next coming charging station. This saves computing power, as the minimum state of charge does not have to be calculated each time driving the route which is of particular advantage for e.g. regular service buses driving the same route several times per day.

The predetermined minimum state of charge may be acquired by reading a stored value in a memory on the vehicle, or by receiving a stored value via telematics, GSM technology or other wireless communication means. Receiving a stored value via telematics, GSM technology or other wireless communication enables also vehicles which have not driven the route before to obtain knowledge of the amount of state of charge required for the route.

The stored values for each planned driving route are regularly automatically updated. In that way, circumstances which affect the electrical energy consumption may be taken into account. Such circumstances may be e.g. a roadwork within an electric-only zone.

The stored values for each planned driving route may be based on historical decrease in state of charge during travelling through the electric-only zone by the vehicle itself and/or other corresponding hybrid electric vehicles. Using stored values based on historical decrease in state of charge for the vehicle itself allows individual adaption to the electric energy consumption of the specific vehicle. Using stored values based on historical decrease in state of charge for corresponding hybrid electric vehicles allows for a good approximation of required minimum state of charge for vehicles which have not recently travelled the route themselves.

The predetermined minimum state of charge may alternatively and/or additionally be acquired by calculating an energy demand/km when driving in the electric-only mode and information concerning electric-only driving length in the planned driving route. This way of acquiring a predetermined minimum state of charge is advantageous if no historical data is available. In its simplest form, an average energy demand/km when driving in electric-only mode is calculated. This value is multiplied by the electric-only driving length (in km) in order to obtain an expected minimum state of charge. Information concerning electric-only driving length may be obtained from an electronic map. Elevation information may also be included in the calculation of the predetermined minimum state of charge. Including elevation information is advantageous as driving uphill requires more energy than driving downhill or flat. Elevation information can be retrieved from an electronic elevation map. An expected energy demand is calculated for each specific kilometre based on the elevation information for that kilometre. The calculated energy demands for each kilometre of the planned driving route are summed up to obtain an expected minimum state of charge required to drive the route. It would also be possible to divide the route into other intervals than kilometres, e.g. metres, miles or any other distance interval.

More elaborate systems for acquiring the predetermined minimum state of charge at end of the charging period may additionally take dynamic aspects into account, such as expected weight of the vehicle or ambient temperature during travelling the planned driving route coming after the next coming charging station. The weight of the vehicle generally has a significant impact on the total energy consumption for driving in electric only-mode. A fully occupied bus will consume more energy than a half empty bus. Hence, the current occupancy degree of the vehicle may be used for adjusting the acquired predetermined minimum state of charge at end of the charging period. Similarly, a hot day with high ambient temperature will generally require more power for the air conditioning system, such that a higher predetermined minimum state of charge at end of the charging period may be required.

The expected increase in state of charge during the charging period at the next coming charging station may be calculated based on expected charging period at charging station and expected charging rate. This is a non-complex and fast way to calculate the expected increase of charge. Alternatively, the expected increase in state of charge during the charging period may be calculated based also on a charging curve characteristic of the specific electrical energy storage system. The calculation may also be based on the expected state of charge levels at the start and end of the charging period as this may also influence the expected increase in state of charge during the charging period.

The expected charging period may be calculated based on predetermined timetable departure time and any of the expected time of getting access to charging station or the expected arrival time at charging station. The expected time of getting access to the charging station can for example depend on if the charging station is occupied by another vehicle. The expected arrival time at the charging station can be influenced by for example delays caused by roadwork, accidents, traffic jams etc. It is also possible that the vehicle has driven faster than was originally expected, e.g. due to very light traffic or few passengers getting on and off.

The expected charging rate may be calculated based on a predetermined constant value or predetermined constant value associated with the specific charging station. This is a simple and fast way to calculate the expected charging rate.

The expected charging rate may be calculated also based on the expected state of charge at arrival and/or departure from the charging station or a registered temperature level of the electrical storage system. This provides a more exact approximation of the charging rate since the charging rate may depend on the level of state of charge as well as on the temperature of the electrical storage system.

The target state of charge at arrival at the next coming charging station may be iteratively updated over time with a certain time interval. This is advantageous since the expected time of getting access to charging station or the expected arrival time at charging station may change over time. For example, an already delayed vehicle may become even more delayed before reaching the charging station. As a consequence, the available charging period will be shorter which means that the expected increase in state of charge during charging will be smaller. Hence, the target state of charge at arrival has to be increased in order to be able to reach the minimum state of charge required for the route after the charging station during the available charging period.

A safety factor may be included when calculating the target state of charge at arrival at the next coming charging station. The inclusion of a safety factor provides margins to cope with unforeseen reductions of the charging period. Such an unforeseen reduction of the charging period may be caused by additional delays before reaching the charging station, an unexpected occupant of the charging station or an occupant of the charging station not leaving the charging station on the expected point of time.

The invention further relates to a control system for controlling a state of charge of an electrical storage system of a plug-in hybrid electric vehicle, according to claim 13.

That is, the control system is arranged to execute the inventive method described above. The advantage of such a control system is that it allows for controlling the electric energy usage of the vehicle before arrival at the next coming charging station such that the required minimum state of charge required for driving the next coming route can be reached at the end of the charging period.

The invention further relates to a plug-in hybrid electric vehicle comprising an electrical storage system and a control system as described above.

The invention further relates to a computer readable medium carrying a computer program product comprising program code means for performing the steps of the inventive method when said program product is run on a computer.

### BRIEF DESCRIPTION OF THE DRAWINGS

With reference to the appended drawings, below follows a more detailed description of embodiments of the invention cited as examples.

In the drawings:
Fig. 1 is a schematic overview of a plug-in hybrid electric vehicle,
Fig. 2 is a schematic overview of the powertrain of a plug-in hybrid electric vehicle,
Fig. 3 is a schematic overview of a driving route with charging stations and an electric-only zone,
Fig. 4 is a graph showing how the state of charge of an electrical storage system varies during driving and charging,
Fig. 5 is a graph showing how the state of charge of an electrical storage system can be controlled to compensate for a late arrival at the charging station,
Fig. 6 is a graph showing how the state of charge of an electrical storage system can be controlled to compensate for the charging station being occupied,
Fig. 7 is a graph showing different examples of how the state of charge of an electrical storage system can be controlled to reach a target state of charge, and
Fig. 8 is a flow chart for carrying out the method according to the disclosure.

### DETAILED DESCRIPTION OF EXAMPLE EMBODIMENTS OF THE INVENTION

Various aspects of the disclosure will hereinafter be described in conjunction with the appended drawings to illustrate and not to limit the disclosure, wherein like designations denote like elements, and variations of the described aspects are not restricted to the specifically shown embodiment, but are applicable on other variations of the disclosure.

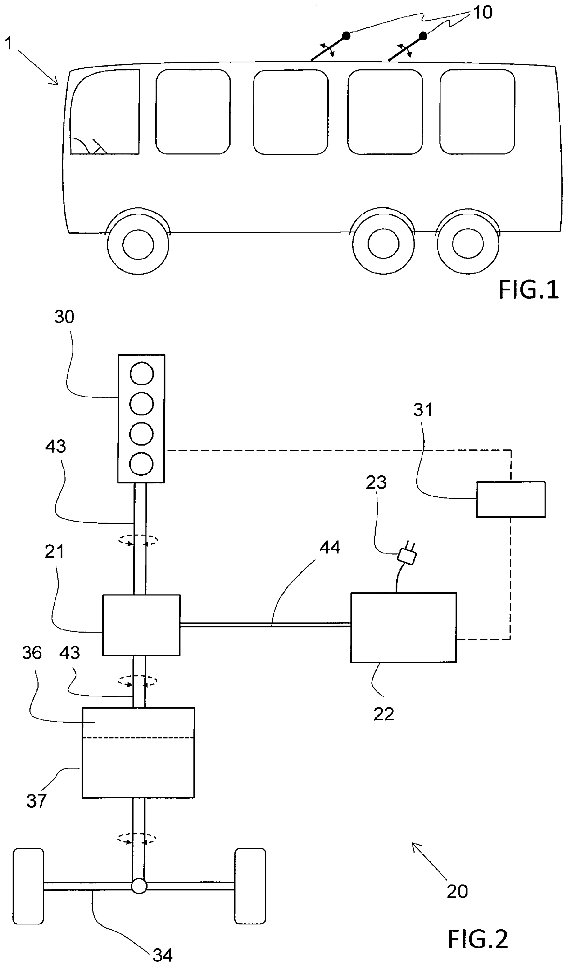

Figure 1 shows an overview of an example of a plug-in hybrid electric vehicle 1, here in the shape of a bus. The vehicle 1 is provided with an electrical charging interface 10 for charging of the electrical storage system of the vehicle. In this example, the electrical charging interface 10 comprises hinged contacts provided on the roof of the vehicle. The hinged contacts are folded flat during driving of the bus, such as to avoid any projections up above the roof of the vehicle 1. As soon the vehicle has arrived and stopped at the charging station, the hinged contacts are folded up towards a pair of stationary electrical contact bars or the like, located above the roof of the vehicle, such that electrical power may charge the electrical storage system. An advantage with such a set-up is that no manual entering of a plug into a socket is needed. The roof position provides the advantage of the electrical contacts being out of reach for e.g. children.

Figure 2 shows a schematic overview of an example of a powertrain 20 of a plug-in hybrid electric vehicle. In this example, the powertrain is a parallel hybrid system. However, in series hybrids and power-split hybrids would also be compatible with the inventive method of this disclosure. The powertrain 20 comprises two motors, a combustion engine 30 and an electrical motor 21. The combustion engine 30 is fuelled by for example petrol, diesel, ethanol, compressed natural gas (CNG) or any other fuel suitable for a combustion engine. The electrical motor 21 is fuelled by electrical energy stored in an electrical storage system 22. The electrical storage system 22 is provided with an electrical charging interface 23 for charging electrical energy from an external electrical energy source into the electrical storage system 22. Here, the electrical charging interface 23 is depicted as a plug. However, the electrical charging interface could just as well by any other type of electrical contact charging interface, such as a sliding contact, or any type of electrical non-contact charging interface such as an inductive charging interface. The electrical storage system 22 is connected to the electrical motor 21 via an electric cable 44. The electrical storage system may comprise hundreds of series-connected electrochemical cells, for example lithium cells. The electrical storage system may also be referred to as a battery pack and the output voltage of the electrical storage system equals the accumulated output voltage of each cell of a common string. A battery pack may of course comprise two or more parallel-connected strings of series-connected cells, where each string comprises about 100-200 cells, for the purpose of increasing the total electrical capacity of the electrical storage system. Alternatively, the electrical storage system 22 may comprise one or more supercapacitors, or any other kind of device capable of storing and delivering electrical energy, for example a combination of electrochemical cells and supercapacitors.

In the parallel hybrid powertrain of Figure 2, the combustion engine 30 and electrical motor 21 are coupled to a common crankshaft 43 and can simultaneously or individually transmit power to drive the driveshaft 34 via a transmission 37. The crankshaft 43 is connected to the transmission 37 via a clutch 36. An electronic control unit 31 controls the propulsion torque output of the combustion engine. The electronic control unit 31 further controls the propulsion torque output of the electrical motor 21 via an electrical storage system 22. For example, the control unit 31 controls the propulsion power contribution ratio between the combustion engine 30 and the electrical motor 21. The control unit 31 further monitors and controls the state of charge of the electrical storage system 22. The control unit 31 is only schematically illustrated and may of course alternatively consist of a plurality control units that are interconnected in any suitable structure.

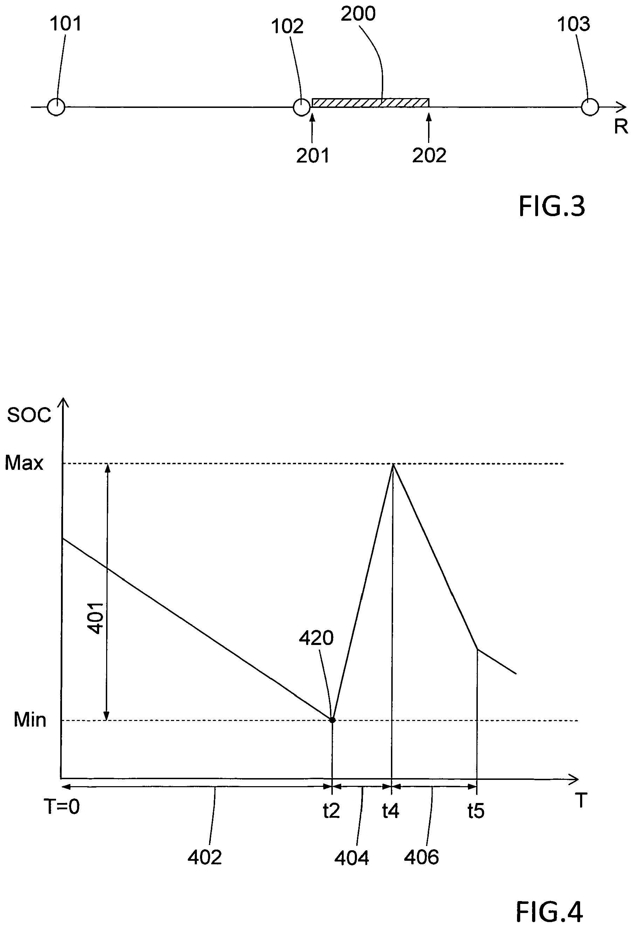

Figure 3 shows a schematic overview of an exemplary driving route R with first, second and third charging stations 101, 102, 103 and an electric-only zone 200 between the second charging station 102 and third charging station 103. In the electric-only zone 200, which may extend for any length, such as typically 1 - 10 kilometres, only electric driving is allowed, i.e. the combustion engine of the vehicle is not allowed to run. Electric-only zones 200 may for example be defined by authorities in purpose to reduce air pollution and noise in a city centre or in another location. The part of the route R within the electric-only zone 200 starts at an electric-only zone start 201 and ends at an electric-only zone end 202. The driving route R may for example constitute a part of a route of a regular service bus. The driving route R may constitute a part of a route of a truck, a taxi, or any other plug-in hybrid electric vehicle.

Figure 4 shows a graph illustrating schematically the state of charge SOC of an electrical storage system of a plug-in hybrid electric vehicle as a function of time T during driving and charging. The time period 402 between T = 0 and time point t2 represents driving in a zone without any restrictions regarding the use of the combustion engine. The time period 404 between time point t2 and t4 represents charging at a charging station. The time period 406 between time point t4 and t5 represents driving in an electric-only zone. The state of charge SOC of the electrical storage system should be kept within a safe operating window 401 at all times in order to ensure a long life cycle of the electrical storage system. This is particularly important for lithium batteries, as lithium cell chemistries are particularly chemically reactive. Hence, the state of charge SOC should never be allowed to fall outside the safe operating window 401, i.e. never exceed a maximum safe level Max or fall below a minimum safe level Min. A state of charge of 100% corresponds herein to said maximum safe level Max, and a state of charge of 0% corresponds herein to said minimum safe level Min. The state of charge SOC is monitored and controlled by the control unit 31 shown in figure 2.

In the example of Figure 4, the state of charge SOC is approximately 70 % of the maximum safe level Max at time T = 0. The time period 402 between T = 0 and time point t2 represents driving in a zone without any restrictions regarding the use of the combustion engine, i.e. the propulsion power contribution ratio between the combustion engine and the electrical motor of the vehicle can be freely controlled. At time point t2, the vehicle arrives at a charging station. Since vehicle propulsion power per driven length generated by means of electricity has a lower cost than vehicle propulsion power per driven length generated by means of combustion engine fuel, it is desirable to have depleted the electrical storage system as much as possible before recharging, i.e. the target state of charge 420 at arrival at the charging station is at the minimum safe level Min. In the example of figure 4, the electrical motor is allowed to consume electrical energy from the electrical storage system during driving such that the state of charge SOC reaches the minimum safe level Min upon arrival at the charging station at time point t2. In Figure 4, the state of charge SOC is schematically depicted to decrease linearly, but the state of charge-curve will during actual use of a plug-in hybrid electric vehicle obviously diverge from the pure linear shape, but keep a generally decreasing trend due to the discharge of the electrical storage system over time. For example, during uphill driving, the state of charge may decrease more rapidly as uphill driving is more energy demanding, while it may decrease less during downhill driving or even slightly increase if regenerative braking is performed during downhill driving. Also, the minimum safe level Min may be reached before arrival at the charging station at time point t2 and kept at the minimum safe level Min until arrival at the charging station by letting only the combustion engine contribute to the vehicle propulsion power. The time period 404 between time point t2 and t4 represents charging at the charging station. During charging, electrical energy is filled into the electrical storage system from an external electric energy source and consequently the state of charge SOC increases. In the example of Figure 4, the time period 404 for charging is sufficient for increasing the state of charge SOC of the electrical storage system from the minimum safe level Min up to the maximum safe level Max, i.e. from 0% to 100%. In Figure 4, the state of charge SOC is schematically depicted to increase linearly, but the state of charge-curve may during actual charging of a plug-in hybrid electric vehicle diverge slightly from the pure linear shape due to the physical, temperature and/or material limitations of the electrical storage system. The time period 406 between time point t4 and t5 represents driving in an electric-only zone 200. Here, the state of charge SOC decreases rapidly as only the electric motor is allowed to drive the vehicle. However, the state of charge SOC does not have to decrease linearly as shown in Figure 4, but may decrease irregularly due to the driving conditions, e.g. the elevation profile of the route within the electric-only zone. Obviously, driving uphill requires more energy than driving downhill. At time point t5 the electric-only zone ends and the propulsion power contribution ratio between the combustion engine and the electrical motor of the vehicle can again be freely controlled in order to reach a desirable state of charge level upon arrival at the next coming charging station (not shown) and/or provide a high degree of fuel economy.

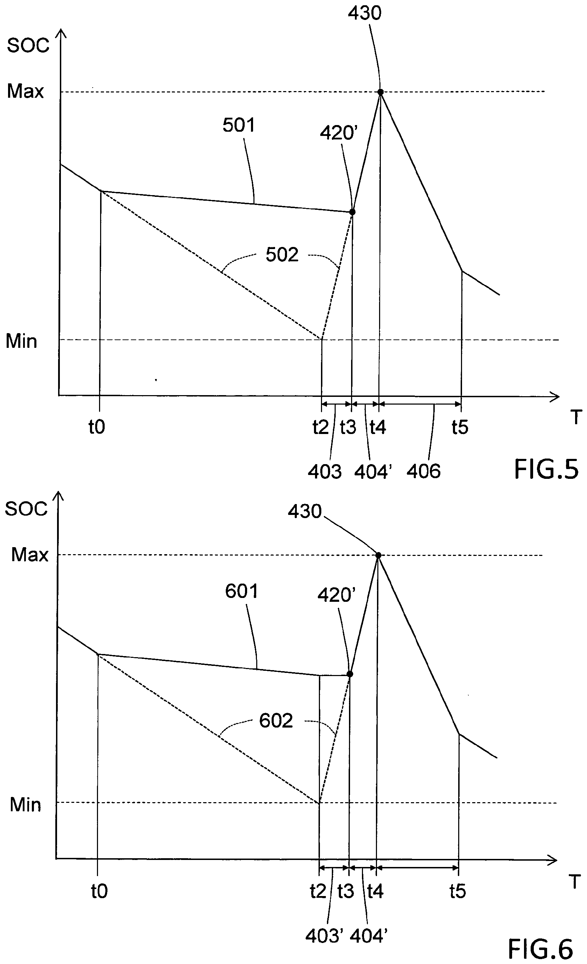

Figure 5 shows a graph illustrating the state of charge SOC of an electrical storage system of a plug-in hybrid electric vehicle as a function of time T during driving and charging along the same route as described in conjunction with Figure 4. The difference is that a delay relative to the scheduled time table appears before reaching the charging station. However, using the inventive method of this disclosure, the delay can be handled and use of the combustion engine in the upcoming electric-only zone 200 can be avoided. In this scenario, it was initially planned to arrive at the charging station at time point t2 in order to have sufficient time for charging up to a desired state of charge SOC level, such as the maximum safe level Max, before having to leave the charging station at time point t4. However, at time point t0 it is registered that the vehicle, for some reason, is estimated to arrive at the charging station behind the time table. Events that may cause a delay are for example unplanned traffic obstructions (congestion, road construction, emergency vehicle, etc.), vehicle problems or an event related to vehicle passengers (large group entering or leaving vehicle, sickness, etc.). It is registered that the vehicle is estimated to arrive at the charging station at time point t3 instead. Hence, the available charging period 404' will be shorter than initially scheduled, between time point t3 and t4 instead of between time point t2 and t4. The time period 403 between time point t2 and t3 represents the delay relative to the predetermined time table. As the charging station in this example illustration of the invention is followed by an electric-only zone, it is important that at least a minimum state of charge level 430 required for travelling the route coming after the charging station is reached at the end of the available charging period 404'. The minimum state of charge level 430 may for example be determined by acquiring a predetermined minimum state of charge value associated with the planned driving route after the next upcoming charging station 201. The predetermined minimum state of charge value may be read from a memory in the vehicle or received by wireless communication. The predetermined minimum state of charge value may for example be based on the decrease in state of charge during previous travels along the same route by the vehicle itself and/or by similar vehicles. Alternatively, the predetermined minimum state of charge may be approximated based on calculations of the amount of energy/km estimated to be required to drive the vehicle in electric mode and the required electric-only driving distance. In the example of Figure 4, the minimum state of charge level 430 to be reached at the end of the charging period 404' is determined to equal the maximum safe level Max, but the minimum state of charge level 430 to be reached at the end of the charging period 404' may less than the maximum safe level Max, depending on the currently used state of charge control strategy.

A large difference between the predetermined minimum state of charge and the amount of energy/km estimated to be required to drive the vehicle in electric mode results generally in a higher safety threshold against reaching the minimum safe level Min state of charge when driving in the electric-only zone, but increases also the likelihood that the state of charge at arrival at the next charging station has not yet reached the minimum safe level Min, indicating potentially unnecessary use of relatively high cost fuel to combustion engine.

A small difference between the predetermined minimum state of charge and the amount of energy/km estimated to be required to drive the vehicle in electric mode results generally in a lower safety threshold against reaching the minimum safe level Min state of charge when driving in the electric-only zone, but decreases also the likelihood that the state of charge at arrival at the next charging station has not yet reached the minimum safe level Min.

As the available charging period 404' will be shorter than initially scheduled and as the charging rate generally cannot be increased, the available charging period 404' will not be sufficient for increasing the state of charge SOC of the electrical storage system all the way from the minimum safe level Min up to the maximum safe level Max. Therefore, an adjusted target state of charge 420' at arrival at the charging station is calculated based on the expected increase in state of charge during the available charging period 404', such that the minimum state of charge level 430 can be reached at the end of the charging period 404'. The expected increase in state of charge during the available charging period is calculated based on the expected charging period 404' and the expected charging rate. The expected charging period 404' is calculated based on the predetermined time point t4 of departure from the charging station according to the time table and the time when charging can be expected to start. The time when charging can be expected to start is in this example the expected time point t3 of arrival at the charging station. The expected charging rate may be calculated based on a predetermined constant value, preferably associated with the specific charging station. In order to achieve a more exact value of the expected charging rate, the calculation may also include the expected state of charge at arrival and/or departure from the charging station, the temperature of the electrical storage system, and/or other similar factors that may affect the charging curve/characteristic of the electrical storage system.

The state of charge SOC is controlled to be at the target state of charge 420' at arrival at the charging station at time point t3 by means of controlling the propulsion power contribution between the combustion engine and the electrical motor while driving to the charging station. Between time points t0 and t3, the solid line 501 represents the new and adjusted state of charge curve controlled as to reach the adjusted target state of charge 420' at t3 while the dashed line 502 represents the standard scenario of controlling the state of charge as to reach the minimum safe level Min at arrival at the charging station at the originally scheduled time point t2 (as described in conjunction with Figure 4). As mentioned before, the state of charge SOC does not necessarily have to decrease linearly, but can also decrease in other manners. With the state of charge SOC at the target state of charge 420' at time point t3 at the beginning of the available charging period 404', the state of charge SOC can be increased during charging to reach the minimum state of charge 430 at time point t4 by the end of the charging period 404'. Consequently, the vehicle can leave the charging station at the scheduled time point t4 with the desired state of charge SOC level, such as the maximum safe level Max, such that enough state of charge is available to be able to drive through the electric-only zone between time point t4 and t5.

Figure 6 shows a graph illustrating the state of charge SOC of an electrical storage system of a plug-in hybrid electric vehicle as a function of time T during driving and charging along the same route as described in conjunction with Figure 4. The difference is that the charging station is prevented from use when the vehicle reaches the charging station, for example due the charging station being occupied by another vehicle. However, using the inventive method of this disclosure, this can be handled. In this scenario, it was planned to arrive at the charging station and start charging at time point t2 in order to have sufficient time for charging up to the maximum safe level Max before having to leave the charging station at time point t4. However, at time point t0 the vehicle receives information, e.g. via telematics, revealing that the charging station is occupied and will not become available until at time point t3. Hence, the available charging period 404' will be shorter than initially scheduled, between time point t3 and t4 instead of between time point t2 and t4. The time period 403' between time point t2 and t3 represents the vehicle standing still at the charging station while waiting for the charging station to become available. As the charging station is followed by an electric-only zone, it is important that at least a minimum state of charge level 430 required for travelling the route coming after the charging station is reached at the end of the available charging period 404'. Just as in the scenario of Figure 4, the minimum state of charge level 430 to be reached at the end of the charging period 404' is here determined to equal the maximum safe level Max. As the available charging period 404' will be shorter than initially scheduled and as the charging rate generally cannot be increased, the available charging period 404' will not be sufficient for increasing the state of charge SOC of the electrical storage system all the way from the minimum safe level Min up to the maximum safe level Max. Therefore, an adjusted target state of charge 420' at arrival at the charging station is calculated based on the expected increase in state of charge during the available charging period 404', such that the minimum state of charge level 430 can be reached at the end of the charging period 404'. The state of charge SOC is controlled to be at the target state of charge 420' at t3 by means of controlling the propulsion power contribution between the combustion engine and the electrical motor while driving to the charging station. Between time points t0 and t3, the solid line 601 represents the state of charge controlled as to reach the adjusted target state of charge 420' at t3 while the dashed line 602 represents the standard scenario of controlling the state of charge as to reach the minimum safe level Min at arrival at the charging station at the originally scheduled time point t2 (as described in conjunction with Figure 4). As mentioned before, the state of charge SOC does not necessarily have to decrease linearly, but can also decrease in other manners. With the state of charge SOC at the target state of charge 420' at time point t3 at the beginning of the available charging period 404', the state of charge SOC can be increased to reach the minimum state of charge 430 at time point t4 by the end of the charging period 404'. Consequently, the vehicle can leave the charging station at the scheduled time point t4 and still have enough state of charge to be able to drive through the electric-only zone between time point t4 and t5.

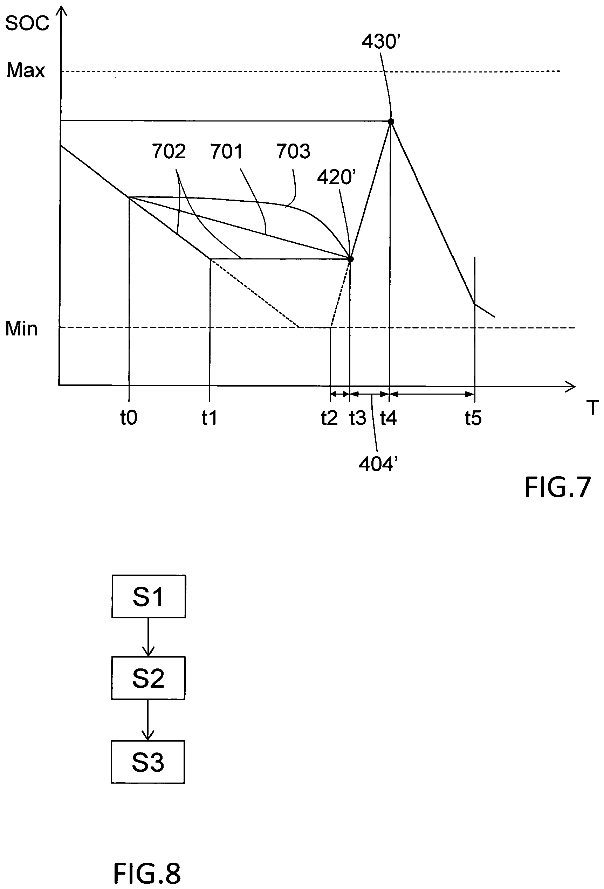

Figure 7 is a graph showing different examples of how the state of charge of an electrical storage system can be controlled to reach a target state of charge 420'. Here, the minimum state of charge 430' to reach at the end of the charging period 404' is determined to a value less than the maximum safe level Max. The minimum state of charge 430' is determined based on the expected state of charge required for travelling the planned driving route coming after the charging station. If the driving route comprises a large electric-only zone, the minimum state of charge 430' has to be high, while if the driving route comprises a small electric-only zone, a lower minimum state of charge will be sufficient for driving through the electric-only zone without using the combustion engine.

In the scenario of Figure 7, it was planned to arrive at the charging station at time point t2 in order to have sufficient time for charging up to the minimum state of charge 430' before having to leave the charging station at time point t4. However, at time point t0 it is discovered that the vehicle, for some reason, is delayed - it will not manage to reach the charging station until at time point t3. Hence, the available charging period 404' will be shorter than initially scheduled. Based on the determined minimum state of charge 430' and the expected increase in state of charge during the charging period 404', a target state of charge 420' at arrival at the charging station is calculated. The target state of charge 420' can be reached in different ways, as illustrated by the exemplary curves 701, 702, and 703. A first alternative, illustrated by the first curve 701, is to deplete the energy storage system at an even rate as to reach the target state of charge 420' just upon arrival at the charging station. A second alternative, illustrated by the second curve 702, is to continue the electric energy usage at the same rate as before time point t0 when the delay was discovered until the target state of charge 420' is reached at a time point t1. From time point t1, the vehicle is driven only by the combustion engine in order to retain the target state of charge 420' until arrival at the charging station at time point t3. A third alternative, illustrated by the third curve 703, is a non-even usage of electric energy such that the state of charge decreases non-linearly. These three alternatives are merely examples of how the state of charge SOC can be controlled to the target state of charge 420' upon arrival at the charging station. Other alternatives are also possible, for example combinations of the described alternatives.

Figure 8 is a schematic flow chart for carrying out the method according to the disclosure. The first step S1 is to determine a minimum state of charge needed at the end of the charging period at the next coming charging station in order to be able to travel the planned driving route coming after that charging station. The second step S2 is to calculate the expected increase in state of charge during the available charging period at the charging station. The third step S3 is to calculate a target state of charge of the electrical storage system upon arrival at the next coming charging station. The target state of charge is calculated such that the minimum state of charge can be reached after charging during the available charging period at the next coming charging station.
It will be appreciated that the above description is merely exemplary in nature and is not intended to limit the present invention, its application or uses. While specific examples have been described in the specification and illustrated in the drawings, it will be understood by those of ordinary skill in the art that various changes may be made and equivalents may be substituted for elements thereof without departing from the scope of the present invention as defined in the claims. For example, even if the detailed description mainly have disclosed the invention in terms of driving through an electric-only zone, the invention is equally applicable when driving through a reduced vehicle noise zone or a vehicle exhaust low emission. Therefore, it is intended that the present disclosure not be limited to the particular examples illustrated by the drawings and described in the specification as the best mode presently contemplated for carrying out the teachings of the present invention, but that the scope of the present invention will include any embodiments falling within the appended claims.

## Claims

1. A method for controlling a state of charge of an electrical storage system (22) of a plug-in hybrid electric vehicle (1), the plug-in hybrid electric vehicle (1) comprising a combustion engine (30) for providing propulsive power, an electrical storage system (22) for providing electrical power to an electrical motor (21) for providing propulsive power, wherein the method comprising the steps of:
- determining a minimum state of charge (430, 430'), at end of an available charging period (404, 404') at a next coming charging station (101, 102, 103), required for traveling a planned driving route coming after the next coming charging station (101, 102, 103), the planned driving route requiring travelling a certain distance with at least electrical assistance by the electrical motor (21);
- calculating expected increase in state of charge during the available charging period (404, 404') at the next coming charging station (101, 102, 103);
- calculating a target state of charge (420, 420') at arrival at the next coming charging station (101, 102, 103), comprising subtracting the calculated expected increase in state of charge from the determined minimum state of charge (430, 430') at the end of the charging period, and
- controlling the state of charge during traveling towards the next coming charging station (101, 102, 103), such that a state of charge corresponding to about target state of charge (420, 420') is attained upon arrival at next coming charging station (101, 102, 103),
wherein controlling the state of charge during traveling towards the next coming charging station (101, 102, 103) is realised by controlling a propulsion power contribution ratio between the combustion engine (30) and the electrical motor (21).

2. The method according to claim 1, wherein the plug-in hybrid electric vehicle (1) is a bus configured to travel along a planned fixed driving route having at least one charging station (101, 102, 103).

3. The method according to claim 1, wherein the planned driving route requires travelling in an electric-only mode a certain distance of the planned driving route.

4. The method according to claim 1, wherein said certain distance of the planned driving route comprises an electric-only zone (200), or a reduced vehicle noise zone, or a vehicle exhaust low emission zone.

5. The method according to any of the previous claims, wherein the minimum state of charge (430, 430') at end of the charging period is determined by acquiring a predetermined minimum state of charge associated with the planned driving route coming after the next coming charging station (101, 102, 103).

6. The method of claim 5, wherein the predetermined minimum state of charge is acquired by reading a stored value in a memory on the vehicle (1), or by receiving a stored value via telematics, GSM technology or other wireless communication means.

7. The method of claim 6, wherein stored values for each planned driving route are regularly automatically updated.

8. The method of claim 6 or claim 7, wherein the stored values for each planned driving route are based on historical decrease in state of charge during travelling through the electric-only zone (200) by the vehicle (1) itself and/or other corresponding plug-in hybrid electric vehicles.

9. The method of claim 5, wherein the predetermined minimum state of charge (430, 430') is acquired by calculating an energy demand/km when driving in the electric-only mode and information concerning electric-only driving length in the planned driving route.

10. The method according to any of the previous claims, wherein the expected increase in state of charge during the charging period at the next coming charging station (101, 102, 103) is calculated based on expected charging period (404, 404') at charging station (101, 102, 103) and expected charging rate.

11. The method of claim 10, wherein the expected charging period (404, 404') is calculated based on predetermined timetable departure time (t4) and any of:
- expected time of getting access to charging station (t3),
- expected arrival time at charging station (t2, t3).

12. The method of claim 10 or claim 11, wherein the expected charging rate is calculated based on a predetermined constant value or predetermined constant value associated with the specific charging station (101, 102, 103).

13. A control system for controlling a state of charge of an electrical storage system (22) of a plug-in hybrid electric vehicle (1) the plug-in hybrid electric vehicle (1) comprising a combustion engine (30) for providing propulsive power, an electrical storage system (22) for providing electrical power to an electrical motor (21) for providing propulsive power, wherein the control system comprises a control unit (31) arranged for:
- determining a minimum state of charge (430, 430'), at end of an avalible charging period at a next coming charging station (101, 102, 103), required for traveling a planned driving route coming after the next coming charging station (101, 102, 103), the planned driving route requiring travelling a certain distance with at least electrical assistance by the electrical motor (21);
- calculating expected increase in state of charge during the available charging period at the next coming charging station (101, 102, 103);
- calculating a target state of charge (420, 420') at arrival at the next coming charging station (101, 102, 103), comprising subtracting the calculated expected increase in state of charge from the determined minimum state of charge (430, 430') at the end of the charging period, and
- controlling the state of charge during traveling towards the next coming charging station (101, 102, 103), such that a state of charge corresponding to about target state of charge (420, 420') is attained upon arrival at next coming charging station (101, 102, 103),
wherein controlling the state of charge during traveling towards the next coming charging station (101, 102, 103) is realised by controlling a propulsion power contribution ratio between the combustion engine (30) and the electrical motor (21).

14. A plug-in hybrid electric vehicle (1) comprising an electrical storage system (22) and a control system according to claim 13.

15. A computer readable medium carrying a computer program product comprising program code means for performing the steps of any of claims 1-12 when said program product is run on a computer.

## Patentansprüche

1. Verfahren zum Steuern eines Ladezustands eines elektrischen Speichersystems (22) eines elektrischen Plug-in-Hybridfahrzeugs (1), wobei das elektrische Plug-in-Hybridfahrzeug (1) einen Verbrennungsmotor (30) zur Bereitstellung der Antriebskraft und ein elektrisches Speichersystem (22) zur Bereitstellung elektrischer Energie für einen Elektromotor (21) zur Bereitstellung der Antriebskraft umfasst, wobei das Verfahren die Schritte umfasst:
- Bestimmen eines Mindestladezustands (430, 430') am Ende eines zur Verfügung stehenden Ladezeitraums (404, 404') an der nächsten bevorstehenden Ladestation (101, 102, 103), der für das Zurücklegen einer geplanten Fahrtroute erforderlich ist, die nach der nächsten bevorstehenden Ladestation (101, 102, 103) kommt, wobei die geplante Fahrtroute das Zurücklegen einer bestimmten Distanz wenigstens mit elektrischer Unterstützung durch den Elektromotor (21) erfordert;
- Berechnen der erwarteten Zunahme des Ladezustands während des zur Verfügung stehenden Ladezeitraums (404, 404') an der nächsten bevorstehenden Ladestation (101, 102, 103);
- Berechnen eines Ziel-Ladezustands (420, 420') bei der Ankunft an der nächsten bevorstehenden Ladestation (101, 102, 103), umfassend das Subtrahieren der berechneten erwarteten Zunahme des Ladezustands von dem bestimmten Mindestladezustand (430, 430') am Ende des Ladezeitraums, und
- Steuern des Ladezustands während des Fahrens zu der nächsten bevorstehenden Ladestation (101, 102, 103), so dass ein Ladezustand, der ungefähr dem Ziel-Ladezustand (420, 420') entspricht, bei der Ankunft an der nächsten bevorstehenden Ladestation (101, 102, 103) erreicht ist,
wobei das Steuern des Ladezustands während des Fahrens zu der nächsten bevorstehenden Ladestation (101, 102, 103) durchgeführt wird, indem ein Beteiligungsverhältnis an der Antriebskraft zwischen dem Verbrennungsmotor (30) und dem Elektromotor (21) gesteuert wird.

2. Verfahren nach Anspruch 1, wobei das elektrische Plug-in-Hybridfahrzeug (1) ein Bus ist, der dafür ausgebildet ist, entlang einer geplanten, festgelegten Fahrtroute zu fahren, die wenigstens eine Ladestation (101, 102, 103) aufweist.

3. Verfahren nach Anspruch 1, wobei die geplante Fahrtroute das Fahren in einem reinen Elektromodus über eine bestimmte Distanz der geplanten Fahrtroute erfordert.

4. Verfahren nach Anspruch 1, wobei die bestimmte Distanz der geplanten Fahrtroute eine Zone für ausschließlich elektrischen Antrieb (200) oder eine Zone für reduzierten Fahrzeuglärm oder eine Zone für niedrige Abgasemissionen umfasst.

5. Verfahren nach einem der vorhergehenden Ansprüche, wobei der Mindestladezustand (430, 430') am Ende des Ladezeitraums bestimmt wird, indem ein vorher bestimmter Mindestladezustand erhalten wird, der mit der geplanten Fahrtroute, die nach der nächsten bevorstehenden Ladestation (101, 102, 103) kommt, in Verbindung steht.

6. Verfahren nach Anspruch 5, wobei der vorher bestimmte Mindestladezustand erhalten wird, indem ein gespeicherter Wert in einem Speicher in dem Fahrzeug (1) abgelesen wird, oder indem ein gespeicherter Wert über Telematik, GSM-Technologie oder andere Mittel der drahtlosen Kommunikation empfangen wird.

7. Verfahren nach Anspruch 6, wobei gespeicherte Werte für jede geplante Fahrtroute regelmäßig automatisch aktualisiert werden.

8. Verfahren nach einem der Ansprüche 6 oder 7, wobei die gespeicherten Werte für jede geplante Fahrtroute auf der historischen Abnahme des Ladezustands während des Fahrens durch die Zone für ausschließlich elektrischen Antrieb (200) durch das Fahrzeug (1) selbst und/oder andere entsprechende elektrische Plug-in-Hybridfahrzeuge beruhen.

9. Verfahren nach Anspruch 5, wobei der vorher bestimmte Mindestladezustand (430, 430') erhalten wird, indem ein Energieverbrauch pro km beim Fahren im reinen Elektromodus sowie Informationen berechnet werden, die die Länge des Fahrens im reinen Elektromodus auf der geplanten Fahrtroute betreffen.

10. Verfahren nach einem der vorhergehenden Ansprüche, wobei die erwartete Zunahme des Ladezustands während des Ladezeitraums an der nächsten bevorstehenden Ladestation (101, 102, 103) auf der Grundlage des erwarteten Ladezeitraums (404, 404') an der Ladestation (101, 102, 103) und der erwarteten Laderate berechnet wird.

11. Verfahren nach Anspruch 10, wobei der erwartete Ladezeitraum (404, 404') auf der Grundlage einer vorher bestimmten fahrplanmäßigen Abfahrzeit (t4) und einem aus Folgendem berechnet wird:
- die erwartete Zeit, zu der Zugriff auf die Ladestation besteht (t3),
- die erwartete Ankunftszeit an der Ladestation (t2, t3).

12. Verfahren nach Anspruch 10 oder Anspruch 11, wobei die erwartete Laderate auf der Grundlage eines vorher bestimmten konstanten Werts oder eines vorher bestimmten konstanten Werts im Zusammenhang mit der spezifischen Ladestation (101, 102, 103) berechnet wird.

13. Steuerungssystem zum Steuern eines Ladezustands eines elektrischen Speichersystems (22) eines elektrischen Plug-in-Hybridfahrzeugs (1), wobei das elektrische Plug-in-Hybridfahrzeug (1) einen Verbrennungsmotor (30) zur Bereitstellung der Antriebskraft und ein elektrisches Speichersystem (22) zur Bereitstellung elektrischer Energie für einen Elektromotor (21) zur Bereitstellung der Antriebskraft umfasst, wobei
das Steuerungssystem eine Steuerungseinheit (31) umfasst, die für Folgendes ausgebildet ist:
- Bestimmen eines Mindestladezustands (430, 430') am Ende eines zur Verfügung stehenden Ladezeitraums an einer nächsten bevorstehenden Ladestation (101, 102, 103), der für das Zurücklegen einer geplanten Fahrtroute erforderlich ist, die nach der nächsten bevorstehenden Ladestation (101, 102, 103) kommt, wobei die geplante Fahrtroute das Zurücklegen einer bestimmten Distanz wenigstens mit elektrischer Unterstützung durch den Elektromotor (21) erfordert;
- Berechnen der erwarteten Zunahme des Ladezustands während des zur Verfügung stehenden Ladezeitraums an der nächsten bevorstehenden Ladestation (101, 102, 103);
- Berechnen eines Ziel-Ladezustands (420, 420') bei der Ankunft an der nächsten bevorstehenden Ladestation (101, 102, 103), umfassend das Subtrahieren der berechneten erwarteten Zunahme des Ladezustands von dem bestimmten Mindestladezustand (430, 430') am Ende des Ladezeitraums, und
- Steuern des Ladezustands während des Fahrens zu der nächsten bevorstehenden Ladestation (101, 102, 103), so dass ein Ladezustand, der ungefähr dem Ziel-Ladezustand (420, 420') entspricht, bei der Ankunft an der nächsten bevorstehenden Ladestation (101, 102, 103) erreicht ist,
wobei das Steuern des Ladezustands während des Fahrens zu der nächsten bevorstehenden Ladestation (101, 102, 103) durchgeführt wird, indem ein Beteiligungsverhältnis an der Antriebskraft zwischen dem Verbrennungsmotor (30) und dem Elektromotor (21) gesteuert wird.

14. Elektrisches Plug-in-Hybridfahrzeug (1), umfassend ein elektrisches Speichersystem (22) und ein Steuerungssystem nach Anspruch 13.

15. Computerlesbares Medium, das ein Computerprogrammprodukt enthält, das Programmcodemittel zum Durchführen der Schritte eines der Ansprüche 1 bis 12 umfasst, wenn das Programmprodukt auf einem Computer ausgeführt wird.

## Revendications

1. Procédé pour commander un état de charge d'un système de stockage électrique (22) d'un véhicule électrique hybride rechargeable (1), le véhicule électrique hybride rechargeable (1) comprenant un moteur à combustion (30) pour fournir une puissance de propulsion, un système de stockage électrique (22) pour fournir une puissance électrique à un moteur électrique (21) afin de fournir une puissance de propulsion, dans lequel le procédé comprend les étapes de :
- détermination d'un état de charge minimal (430, 430'), à la fin d'une période de charge disponible (404, 404') au niveau d'une prochaine station de charge (101, 102, 103), nécessaire pour parcourir un itinéraire de conduite planifié venant à la suite de la prochaine station de charge (101, 102, 103), l'itinéraire de conduite planifié nécessitant de parcourir une certaine distance avec au moins une assistance électrique par le moteur électrique (21) ;
- calcul d'une augmentation attendue de l'état de charge pendant la période de charge disponible (404, 404') au niveau de la prochaine station de charge (101, 102, 103) ;
- calcul d'un état de charge cible (420, 420') à l'arrivée à la prochaine station de charge (101, 102, 103), comprenant le fait de soustraire l'augmentation attendue calculée de l'état de charge de l'état de charge minimal déterminé (430, 430') à la fin de la période de charge, et
- commande de l'état de charge pendant le déplacement vers la prochaine station de charge (101, 102, 103), de sorte qu'un état de charge correspondant à environ un état de charge cible (420, 420') soit atteint lors de l'arrivée à la prochaine station de charge (101, 102, 103),
dans lequel la commande de l'état de charge pendant le déplacement vers la prochaine station de charge (101, 102, 103) est réalisée en commandant un rapport de contribution de puissance de propulsion entre le moteur à combustion (30) et le moteur électrique (21).

2. Procédé selon la revendication 1, dans lequel le véhicule électrique hybride rechargeable (1) est un bus configuré pour se déplacer le long d'un itinéraire de conduite fixe planifié ayant au moins une station de charge (101, 102, 103).

3. Procédé selon la revendication 1, dans lequel l'itinéraire de conduite planifié nécessite de parcourir une certaine distance de l'itinéraire de conduite planifié en mode seulement électrique.

4. Procédé selon la revendication 1, dans lequel ladite certaine distance de l'itinéraire de conduite planifié comprend une zone seulement électrique (200), ou une zone à bruit de véhicule réduit, ou une zone à faible émission d'échappement de véhicule.

5. Procédé selon l'une quelconque des revendications précédentes, dans lequel l'état de charge minimal (430, 430') à la fin de la période de charge est déterminé en acquérant un état de charge minimal prédéterminé associé avec l'itinéraire de conduite planifié venant à la suite de la prochaine station de charge (101, 102, 103).

6. Procédé de la revendication 5, dans lequel l'état de charge minimal prédéterminé est acquis en lisant une valeur stockée dans une mémoire sur le véhicule (1), ou en recevant une valeur stockée via la télématique, la technologie GSM, ou un autre moyen de communication sans fil.

7. Procédé de la revendication 6, dans lequel des valeurs stockées pour chaque itinéraire de conduite planifié sont régulièrement mises à jour automatiquement.

8. Procédé de la revendication 6 ou 7, dans lequel les valeurs stockées pour chaque itinéraire de conduite planifié sont basées sur une diminution historique de l'état de charge pendant le déplacement sur la zone seulement électrique (200) par le véhicule (1) lui-même et/ou d'autres véhicules électriques hybrides rechargeables correspondants.

9. Procédé de la revendication 5, dans lequel l'état de charge minimal prédéterminé (430, 430') est acquis en calculant une demande d'énergie/km lors de la conduite en mode seulement électrique, et des informations concernant la longueur de conduite en mode seulement électrique dans l'itinéraire de conduite planifié.

10. Procédé selon l'une quelconque des revendications précédentes, dans lequel l'augmentation prévue de l'état de charge pendant la période de charge au niveau de la prochaine station de charge (101, 102, 103) est calculée en se basant sur la période de charge attendue (404, 404') au niveau de la station de charge (101, 102, 103) et un taux de charge attendu.

11. Procédé de la revendication 10, dans lequel la période de charge attendue (404, 404') est calculée en se basant sur un horaire de départ prédéterminé (t4) et l'un quelconque parmi :
- un moment attendu d'obtention d'accès à une station de charge (t3),
- un moment attendu d'arrivée à une station de charge (t2, t3).

12. Procédé de la revendication 10 ou 11, dans lequel le taux de charge attendu est calculé en se basant sur une valeur constante prédéterminée ou une valeur constante prédéterminée associée avec la station de charge spécifique (101, 102, 103).

13. Système de commande pour commander un état de charge d'un système de stockage électrique (22) d'un véhicule électrique hybride rechargeable (1), le véhicule électrique hybride rechargeable (1) comprenant un moteur à combustion (30) pour fournir une puissance de propulsion, un système de stockage électrique (22) pour fournir une puissance électrique à un moteur électrique (21) afin de fournir une puissance de propulsion,
dans lequel
le système de commande comprend une unité de commande (31) agencée pour :
- déterminer un état de charge minimal (430, 430'), à la fin d'une période de charge disponible au niveau d'une prochaine station de charge (101, 102, 103), nécessaire pour parcourir un itinéraire de conduite planifié venant à la suite de la prochaine station de charge (101, 102, 103), l'itinéraire de conduite planifié nécessitant de parcourir une certaine distance avec au moins une assistance électrique par le moteur électrique (21) ;
- calculer une augmentation attendue de l'état de charge pendant la période de charge disponible au niveau de la prochaine station de charge (101, 102, 103) ;
- calculer un état de charge cible (420, 420') à l'arrivée à la prochaine station de charge (101, 102, 103), comprenant le fait de soustraire l'augmentation attendue calculée de l'état de charge de l'état de charge minimal déterminé (430, 430') à la fin de la période de charge, et
- commander l'état de charge pendant le déplacement vers la prochaine station de charge (101, 102, 103), de sorte qu'un état de charge correspondant à environ un état de charge cible (420, 420') soit atteint à l'arrivée à la prochaine station de charge (101, 102, 103),
dans lequel commander l'état de charge pendant le déplacement vers la prochaine station de charge (101, 102, 103) est réalisé en commandant un rapport de contribution de puissance de propulsion entre le moteur à combustion (30) et le moteur électrique (21).

14. Véhicule électrique hybride rechargeable (1) comprenant un système de stockage électrique (22) et un système de commande selon la revendication 13.

15. Support lisible par ordinateur portant un produit de programme informatique comprenant un moyen de code de programme pour effectuer les étapes de l'une quelconque des revendications 1-12 lorsque ledit produit de programme est exécuté sur un ordinateur.
